# EUROPEAN PATENT APPLICATION

(11) **EP 1 001 369 A2**
(43) Date of publication of application: **17.05.2000**
(21) Application number: 99121741.5
(22) Date of filing: 03.11.1999
(51) Int. Cl.: G06T 1/20

(54) **Real-time volume rendering system**

(30) Priority: 12.11.1998 US 190634
(71) Applicant: MITSUBISHI DENKI KABUSHIKI KAISHA, Tokyo 100-8310 (JP)
(72) Inventor: Kappler, Christopher Jon, 75004 Paris (FR); Knittel, James, Groton, Massachusetts 01450 (US); Lauer, Hugh C., Concord, Massachusetts 01742 (US); Osborne, Randy B., Beaverton, Oregon 97006 (US); Pfister, Hanspeter, Sommerville, Massachusetts 02143 (US); Burgess, Steve, Medfield, Massachusetts 02052 (US)
(74) Representative: Pfenning, Meinig & Partner

(57) **Abstract**

A volume rendering processor processes volume data in sections. Within each section, groups of volume elements or "voxels" are read and processed in parallel. Each group in a beam of voxels is read and processed until a section boundary in a first dimension is reached, each beam in a slice of voxels is read and processed until a section boundary in a second dimension is reached, and each slice of voxels is read and processed until a boundary of the volume data set in the third dimension is reached. The section boundary in either the first or second dimension may coincide with a boundary of the volume data set in the same dimension. Rendering pipelines are associated with respective voxels within each group, and each pipeline calculates intermediate values for all the associated voxels within the volume data. Within each pipeline, intermediate values for use in subsequent calculations for voxels associated with the pipeline are retained. Intermediate values to be used in calculations for voxels associated with a neighboring pipeline are transferred to the neighboring pipeline, and intermediate values calculated by a neighboring pipeline to be used for calculations for voxels associated with the one pipeline are received from the neighboring pipeline. During processing of the boundary portion of each section, intermediate values are stored into a memory, and values stored in the memory for a preceding section are retrieved and used for calculations within the processor. A section memory has two independent banks that are alternately read and written to. First-in-first-out (FIFO) buffers are employed to store section data when the section memory banks are switching between reading and writing operations.

## Description

### CROSS REFERENCE TO RELATED APPLICATIONS

### --Not Applicable--

### BACKGROUND OF THE INVENTION

The present invention is related to the field of computer graphics, and in particular to volume graphics.

Volume graphics is the subfield of computer graphics that deals with the visualization of objects or phenomena represented as sampled data in three or more dimensions. These samples are called volume elements, or "voxels," and contain digital information representing physical characteristics of the objects or phenomena being studied. For example, voxel values for a particular object or system may represent density, type of material, temperature, velocity, or some other property at discrete points in space throughout the interior and in the vicinity of that object or system.

Volume rendering is the part of volume graphics concerned with the projection of volume data as two-dimensional images for purposes of printing, display on computer terminals, and other forms of visualization. By assigning colors and transparency to particular voxel data values, different views of the exterior and interior of an object or system can be displayed. For example, a surgeon needing to examine the ligaments, tendons, and bones of a human knee in preparation for surgery can utilize a tomographic scan of the knee and cause voxel data values corresponding to blood, skin, and muscle to appear to be completely transparent. The resulting image then reveals the condition of the ligaments, tendons, bones, etc. which are hidden from view prior to surgery, thereby allowing for better surgical planning, shorter surgical operations, less surgical exploration and faster recoveries. In another example, a mechanic using a tomographic scan of a turbine blade or welded joint in a jet engine can cause voxel data values representing solid metal to appear to be transparent while causing those representing air to be opaque. This allows the viewing of internal flaws in the metal that would otherwise be hidden from the human eye.

Real-time volume rendering is the projection and display of volume data as a series of images in rapid succession, typically at 30 frames per second or faster. This makes it possible to create the appearance of moving pictures of the object, phenomenon, or system of interest. It also enables a human operator to interactively control the parameters of the projection and to manipulate the image, thus providing the user with immediate visual feedback. It will be appreciated that projecting tens of millions or hundreds of millions of voxel values to an image requires enormous amounts of computing power. Doing so in real time requires substantially more computational power.

Additional general background on volume rendering is presented in a book entitled "Introduction to Volume Rendering" by Barthold Lichtenbelt, Randy Crane, and Shaz Naqvi, published in 1998 by Prentice Hall PTR of Upper Saddle River, New Jersey. Further background on volume rendering architectures is found in a paper entitled "Towards a Scalable Architecture for Real-time Volume Rendering" presented by H. Pfister, A. Kaufman, and T. Wessels at the 10th Eurographics Workshop on Graphics Hardware at Masstricht, The Netherlands, on August 28 and 29, 1995. This paper describes an architecture now known as "Cube 4" which a precursor of the present invention. The Cube 4 is also described in a Doctoral Dissertation entitled "Architectures for Real-Time Volume Rendering" submitted by Hanspeter Pfister to the Department of Computer Science at the State University of New York at Stony Brook in December 1996, and in U.S. Patent #5,594,842, "Apparatus and Method for Real-time Volume Visualization."

Cube 4 and other architectures achieve real-time volume rendering using the technique of parallel processing. A plurality of processing elements are deployed to concurrently perform volume rendering operations on different portions of a volume data set, so that the overall time required to render the volume is reduced in substantial proportion to the number of processing elements. In addition to requiring a plurality of processing elements, parallel processing of volume data requires a high-speed interface between the processing elements and a memory storing the volume data, so that the voxels can be retrieved from the memory and supplied to the processing elements at a sufficiently high data rate to enable the real-time rendering to be achieved.

Volume rendering as performed by Cube 4 is an example of a technique known as "ray-casting". A large number of rays are passed through a volume in parallel and processed by evaluating the volume data a slice at a time, where a "slice" is a planar set of voxels parallel to a face of the volume data set. Using this fast slice-processing technique in specialized electronic hardware, as opposed to software, frame processing rates can be increased from two frames per second to 30 frames per second at a modest cost.

The essence of the Cube-4 system is that the three dimensional sampled data representing the object is distributed across the memory modules by a technique called "skewing," so that adjacent voxels in each dimension are stored in adjacent memory modules. Each memory module is associated with its own processing pipeline. Moreover, voxels are organized in the memory modules so that if there are a total of P pipelines and P memory modules, then P adjacent voxels can be fetched simultaneously, in parallel, within a single cycle of a computer memory system, independent of the viewing direction. This reduces the total time to fetch voxels from memory by a factor of P. For example, if the data set has 256³ voxels and P has the value four, then only 256³/4 or approximately four million memory cycles are needed to fetch the data in order to render an image.

An additional characteristic of the Cube-4 system is that the computational processing required for volume rendering is organized into pipelines with specialized functions for this purpose. Each pipeline is capable of starting the processing of a new voxel in each cycle. Thus, in the first cycle, the pipeline fetches a voxel from its associated memory module and performs the first step of processing. Then in the second cycle, it performs the second step of processing of this first voxel, while at the same time fetching the second voxel and performing the first step of processing this voxel. Likewise, in the third cycle, the pipeline performs the third processing step of the first voxel, the second processing step of the second voxel, and the first processing step of the third voxel. In this manner, voxels from each memory module progress through its corresponding pipeline in lock-step fashion, one after the another, until all voxels are fully processed. Thus, instead of requiring 10 to 100 computer instructions per voxel, a new voxel can be processed in every cycle.

A further characteristic of the Cube-4 system is that each pipeline communicates only with its nearest neighbors. Such communication is required, for example, to transmit voxel values from one pipeline to the next for purposes of estimating gradients or normal vectors so that lighting and shadow effects can be calculated. It is also used to communicate the values of rays as they pass through the volume accumulating visual characteristics of the voxels in the vicinities of the areas through which they pass. This approach of nearest neighbor communication provides the Cube-4 one of its principal advantages, that of being "scalable." That is, in order to accommodate larger amounts of three dimensional sampled data and/or in order to process this data faster, it is only necessary to add more memory modules and pipelines. There are no common busses or other system resources to be overloaded by the expansion.

In the Cube-4 system, volume rendering proceeds as follows. Data is organized as a cube or other rectangular data structure. Considering first the face of this cube or solid that is most nearly perpendicular to the viewing direction, a partial row of P voxels at the top corner is fetched from P memory modules concurrently, in one memory cycle, and inserted into the first stage of the P processing pipelines. In the second cycle these voxels are moved to the second stage of their pipelines. At the same time, the next P voxels are fetched from the same row and inserted into the first stage of their pipelines. In each subsequent cycle, P more voxels are fetched from the top row and inserted into their pipelines, while previously fetched voxels move to later stages of their pipelines. This continues until the entire row of voxels has been processed. In the terminology of the Cube-4 system, a row of voxels is called a "beam" and a group of P voxels within a beam is called a "partial beam."

After the groups of voxels in a row have been processed, the voxels of the next row are processed, and so on, until all of the rows of the face of the volume date set have been fetched and inserted into their processing pipelines. This face is called a "slice." Then, the Cube-4 system moves again to the top corner, but this time starts fetching the P voxels in the top row immediately behind the face, that is from the second "slice." In this way, it progresses through the second slice of the data set, a row at a time and within each row, P voxels at time. After completing the second slice, it proceeds to the third slice, then to subsequent slices in a similar manner, until all slices have been processed. The purpose of this approach is to fetch and process all of the voxels in an orderly way, P voxels at a time, until the entire volume data set has been processed and an image has been formed.

The processing stages of the Cube-4 system perform all of the calculations required for the ray-casting technique, including interpolation of samples, estimation of the gradients or normal vectors, assignments of colors and transparency or opacity, and calculation of lighting and shadow effects to produce the final image on the two dimensional view surface.

The Cube-4 system is designed to be capable of being implemented in semiconductor technology. However, two limiting factors prevent it from achieving the small size and low cost necessary for personal or desktop-size computers, namely the rate of accessing voxel values from memory modules and the amount of internal storage required in each processing pipeline. With regard to the rate of accessing memory, the method of skewing voxel data across memory modules in Cube-4 leads to patterns of accessing voxel memory that are equivalent to random accesses. Therefore, in order to achieve real-time volume rendering performance, voxel memory in a practical implementation of Cube-4 must either comprise very expensive static random access memory (SRAM) modules or a very large number of independent Dynamic Random Access Memory (DRAM) modules to provide adequate access rates. With regard to the internal storage, the Cube-4 algorithm requires that each processing pipeline store intermediate results within itself during processing, the amount of storage being proportional to the area of the face of the volume data set being rendered. For a 256³ data set, this amount turns out to be so large that the size of a single chip processing pipeline is excessive and therefore impractical for a personal computer system.

In order to make real-time volume rendering practical for personal and desktop computers, an improvement upon the Cube-4 system referred to as "EM Cube" employs techniques including architecture modifications to permit the use of high capacity, low cost Dynamic Random Access Memory or DRAM devices for memory modules. The EM Cube system is described in U.S. patent application serial no. 08/905,238, filed August 1, 1997, entitled "Real-Time PC Based Volume Rendering System", and is further described in a paper by R. Osborne, H. Pfister, et al. entitled "EM-Cube: An Architecture for Low-Cost Real-Time Volume Rendering," published in the Proceedings of the 1997 SIGGraph/Eurographics Workshop on Graphics Hardware, Los Angeles, California, on August 3-4, 1997.

The EM-Cube system utilizes DRAM chips that support "burst mode" access to achieve both low cost and high access rates to voxel memory. In order to exploit the burst mode, EM Cube incorporates architectural modifications that are departures from the Cube-4 system. In a first modification, called "blocking," voxel data is organized into blocks so that all voxels within a block are stored at consecutive memory addressed within a single memory module. Each processing pipeline fetches an entire block of neighboring voxels in a burst rather than one voxel at a time. In this way, a single processing pipeline can access memory at data rates of 125 million or more voxels per second, thus making it possible for four processing pipelines and four DRAM modules to render 256³ data sets at 30 frames per second.

In EM Cube, each block is processed in its entirety within the associated processing pipeline. EM Cube employs an inter-chip communication scheme to enable each pipeline to communicate intermediate values to neighboring pipelines as required. For example, when a pipeline in EM Cube encounters either the right, bottom or rear face of a block, it is necessary to transmit partially accumulated rays and other intermediate values to the pipeline that is responsible for processing the next block located on the other side of the respective face. Significant inter-chip communication bandwidth is required to transmit these intermediate values.

Like Cube 4, the EM Cube architecture is designed to be scalable, so that the same basic building blocks can be used to build systems with significantly different cost and performance characteristics. In particular, the above-described block processing technique and inter-chip communication structure of EM Cube are designed such that systems using different numbers of chips and processing pipelines can be implemented. Thus block-oriented processing and high-bandwidth inter-chip communication help EM Cube to achieve its goals of real-time performance and scalability. It will be appreciated, however, that these features also have attendant costs, notably the cost of providing area within each processing pipeline for block storage buffers and also the costs of chip I/O pins and circuit board area needed to effect the inter-chip communication.

In a second modification to the Cube-4 architecture, EM Cube also employs a technique called "sectioning" in order to reduce the amount of on-chip buffer storage required for rendering. In this technique, the volume data set is subdivided into sections and rendered a section at a time. Partially accumulated rays and other intermediate values are stored in off-chip memory across section boundaries. Because each section presents a face with a smaller area to the rendering pipeline, less internal storage is required. The effect of this technique is to reduce the amount of intermediate storage in a processing pipeline to an acceptable level for semiconductor implementation.

Sectioning in EM Cube is an extension of the basic block-oriented processing scheme and is supported by some of the same circuitry required for the communication of intermediate values necessitated by the block processing architecture. However, sectioning in EM Cube results in very bursty demands upon off-chip memory modules in which partially accumulated rays and other intermediate values are stored. That is, intermediate data are read and written at very high data rates when voxels near a section boundary are being processed, while at other times no intermediate data are being read from or written to the off-chip memory. In EM Cube it is sensible to minimize the amount of intermediate data stored in these off-chip memory modules in order to minimize the peak data rate to and from the off-chip memory when processing near a section boundary. Thus in EM Cube many of the required intermediate values are re-generated within the processing pipelines rather than being stored in and retrieved from the off-chip memory modules. During the processing carried out in each section near the boundary with the preceding section, voxels from the preceding section are re-read and partially processed in order to re-establish the intermediate values in the processing pipeline that are required for calculation in the new section.

While the EM Cube system achieves greater cost effectiveness than the prior Cube 4 system, it would be desirable to further lower costs to enable more widespread enjoyment of the benefits of volume rendering. Further, it would be desirable to achieve such cost reductions while retaining real-time performance levels.

### BRIEF SUMMARY OF THE INVENTION

In accordance with the present invention, a volume rendering processor employs a voxel processing method that lends itself to single-chip implementation, enabling the implementation of cost-effective volume rendering systems. Parallel processing elements are responsible for processing individual voxels within small groups, and the groups are traversed in a sequential order. The method thus avoids the communications costs associated with the block-oriented processing of the prior art. A sectioning technique adapted to the method of processing individual voxels in small groups is employed. The sectioning technique reduces on-chip buffer storage requirements while exhibiting substantially less burstiness in its demands of off-chip memory than in the prior art, and thus further enhances the cost-effectiveness of volume rendering systems.

According to the method, a three-dimensional volume data set of voxels representing a three-dimensional object is partitioned into sections defined by section boundaries. The volume data set is processed section-by-section. Processing in each section proceeds as follows: For each group of voxels in a "beam" having one or more groups of voxels, the group of voxels is read from a memory and the voxels within the group are processed in respective parallel processing elements to generate partially composited ray data values. The term "compositing" refers to the process of combining illumination, color and opacity values along a ray to form a final pixel value in the image being rendered. The reading and processing of groups of the beam proceeds until a section boundary is reached in a first dimension of the volume data set. For each subsequent beam of voxels in a "slice" having at least one beam of voxels, the reading and processing are repeated for the groups within the respective beam until a section boundary is reached in a second dimension of the volume data set. The reading and processing are further repeated for each subsequent slice of voxels in the section until the boundary of the volume data set in the third dimension is reached. After all sections have been processed in this manner, the ray data values have been fully composited and the composited values may be used to generate the final rendered image.

In one embodiment, the section boundary in the second dimension is coincident with the boundary of the volume data set itself in the second dimension, while the section boundary in the first dimension is a boundary with another section.

Because of the low communication and storage requirements of the voxel processing method, a volume rendering processor using the method can be implemented on a single integrated circuit, so that high-performance and cost-effective volume rendering systems can be realized.

Other aspects of the present invention also contribute to high performance. According to one aspect of the disclosed sectioning technique, when a section boundary is encountered during the processing of a section, all of the intermediate values generated within a pipelined processing element for use by another processing element are stored into a memory. The intermediate values are retrieved and supplied to the target processing element at the appropriate time during the processing of a subsequent section. Consequently, it is not necessary to re-read voxels from memory in order to re-establish the intermediate values within the pipeline when processing for the new section begins, so processing is not adversely impacted by excess demand on the memory.

In one embodiment, the memory used to store intermediate values is a section memory having two independent banks or modules. When a section boundary is encountered, one bank is written with new intermediate values to be used during the processing of a subsequent section, and previously-stored intermediate values are read from the other bank in order to complete processing of the current section. Access to the banks is switched at the completion of each section, so that during the processing of the next section previously-stored intermediate values are read from the one bank, and new intermediate values for the new section are written to the other bank. This technique enables the transfer of intermediate values at a sufficiently high data rate so that processing performance is not adversely affected by the section data transfer.

Other aspects, features, and advantages of the present invention are disclosed in the detailed description which follows.

### BRIEF DESCRIPTION OF THE SEVERAL VIEWS OF THE DRAWING

The foregoing features of this invention, as well as the invention itself, may be more fully understood from the following Detailed Description of the Invention, and Drawing, of which:
Figure 1 is a diagrammatic illustration of a volume data set;
Figure 2 is a diagrammatic illustration of a view of a volume data set being projected onto an image plane by means of ray-casting;
Figure 3 is a cross-sectional view of the volume data set of Figure 2;
Figure 4 is a diagrammatic illustration of the processing of an individual ray by ray-casting;
Figure 5 is a block diagram of a pipelined processing element for real-time volume rendering in accordance with the present invention;
Figure 6 is a block diagram of the logical layout of a volume graphics printed circuit board in accordance with the present invention;
Figure 7 is a block diagram of the general layout of a volume rendering integrated circuit on the circuit board of Figure 7 which includes the processing element of Figure 5;
Figure 8 is a schematic representation of an organization and traversal of voxels for volume rendering according to the present invention;
Figure 9 illustrates how a volume data set is organized into sections by the processing element of Figure 5;
Figure 10 is a block diagram of the processing element of Figure 5 showing parallel processing pipelines;
Figure 11 is a block diagram showing a section memory interface between one end-most processing pipeline of Figure 10 and a section memory on the printed circuit board of Figure 6;
Figure 12 is a block diagram of the section memory interface of Figure 11;
Figure 13 illustrates the manner in which two banks of the section memory of Figure 11 are used to process the sections of Figure 9;
Figure 14 is a timing diagram showing the write operation for the section memory of Figure 11;
Figure 15 is a timing diagram showing the read operation for the section memory of Figure 11;
Figure 16 is a timing diagram showing the transition between write and read operations for the section memory of Figure 11; and
Figure 17 is a timing diagram showing the operation of the section memory of Figure 11 over the period of processing the entire volume data set of Figure 9.

### DETAILED DESCRIPTION OF THE INVENTION

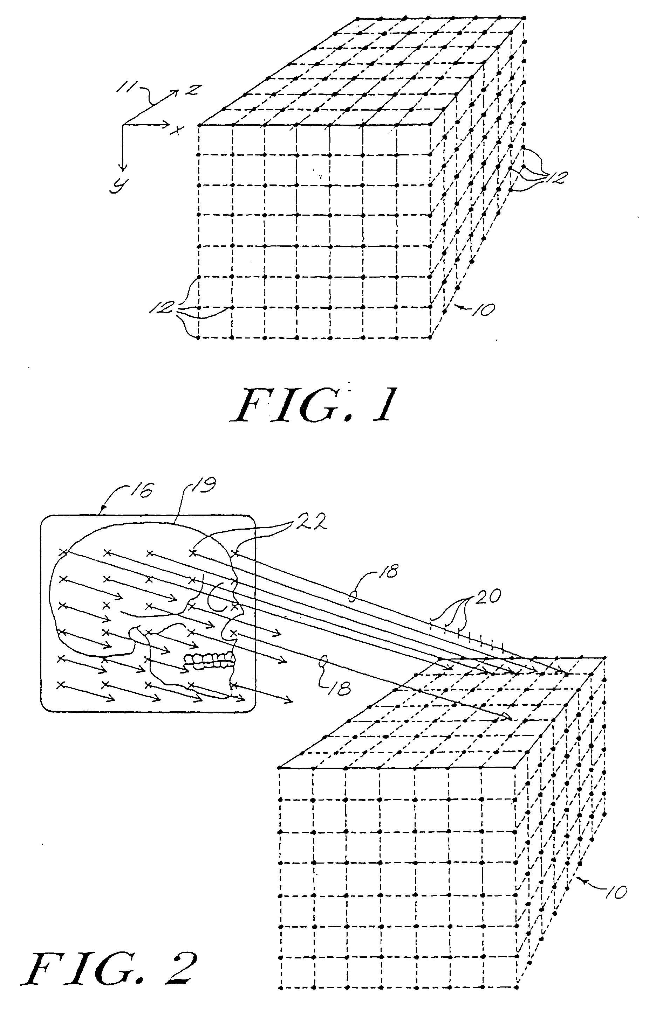

Referring now to Figure 1 and by way of further background, a view of a three-dimensional volume data set 10 is shown. Figure 1 depicts an array of voxel positions 12 arranged in the form of a parallelepiped. More particularly, the voxel positions 12 fill the are arranged in three dimensions and are spaced in a regular pattern. The position of each voxel can be represented in a coordinate system defined by the three axes 11 labeled X, Y, and Z. Associated with each voxel position 12 is one or more data values each representing a characteristic of an object, system, or phenomenon, for example density, type of material, temperature, velocity, opacity or other properties at discrete points in space throughout the interior and in the vicinity of that object or system. It is convenient to represent a volume data set in a computer as a three-dimensional array of values, with the value at array index position (X, Y, Z) corresponding to the volume data values at coordinates (X, Y, Z) in three-dimensional space.

The X, Y and Z axes are chosen as follows. First, the origin is the vertex of the volume data set 10 that is nearest to an *image plane* (described in Figure 2 below) on which the rendered volume is to be displayed. Then the axis most nearly parallel to the direction from which the object is being viewed (known as the "view direction") is chosen as the Z axis. The X and Y axes are chosen from among the remaining two axes arbitrarily. As a result of this method of choosing, the Z coordinate of a line extending in the view direction away from the image plane through the volume data set 10 is always increasing, and the X and Y coordinates are either increasing or constant, but never decreasing.

Figure 2 illustrates an example of a volume data set 10 comprising an array of slices from a tomographic scan of the human head. A two-dimensional image plane 16 represents the surface on which a volume rendered projection of the human head is to be displayed. In a technique known as ray-casting, imaginary rays 18 are cast from pixel positions 22 on the image plane 16 through the volume data set 10, with each ray 18 accumulating color and opacity from the data at voxel positions as it passes through the volume. In this manner the color, transparency, and intensity as well as other parameters of a pixel are extracted from the volume data set as the accumulation of data at sample points 20 along the ray. In this example, voxel values associated with bony tissue are assigned an opaque color, and voxel values associated with all other tissue in the head are assigned a transparent color. Therefore, the result of accumulation of data along a ray and the attribution of this data to the corresponding pixel result in an image 19 in the image plane 16 that appears to an observer to be an image of a three-dimensional skull, even though the actual skull is hidden from view by the skin and other tissue of the head.

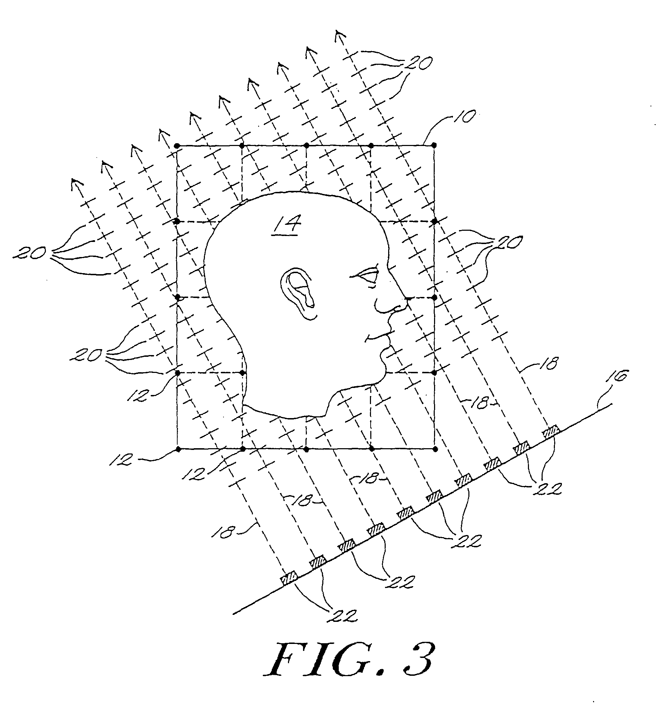

In order to appreciate more fully the method of ray-casting, Figure 3 depicts a two-dimensional cross-section of the three-dimensional volume data set 10 of Figure 2. The first and second dimensions correspond to the dimensions illustrated on the plane of the page. The third dimension of volume data set 10 is perpendicular to the printed page so that only a cross section of the data set 20 can be seen in the figure. Voxel positions are illustrated by dots 12 in the figure. The voxels associated with each position are data values that represent some characteristic or characteristics of a three-dimensional object 14 at fixed points of a rectangular grid in three-dimensional space. Also illustrated in Figure 3 is a one-dimensional view of the two-dimensional image plane 16 onto which an image of object 14 is to be projected in terms of providing pixels 22 with the appropriate characteristics. In- this illustration, the second dimension of image plane 16 is also perpendicular to the printed page.

In the technique of ray-casting, rays 18 are extended from pixels 22 of the image plane 16 through the volume data set 10. The rays 18 are cast perpendicular to the image plane 16. Each ray 18 accumulates color, brightness, and transparency or opacity at sample points 20 along that ray. This accumulation of light determines the brightness and color of the corresponding pixels 22. Thus while the ray is depicted going outwardly from a pixel through the volume, the accumulated data can be thought of as being transmitted back along the ray where the data is provided to the corresponding pixel to give the pixel color, intensity and opacity or transparency, amongst other parameters.

It will be appreciated that although Figure 3 suggests that the third dimension of volume data set 10 and the second dimension of image plane 16 are both perpendicular to the printed page and therefore parallel to each other, in general this is not the case. The image plane may have any orientation with respect to the volume data set, so that rays 18 may pass through the volume data set 10 at any angle in all three dimensions.

It will also be appreciated that sample points 20 do not necessarily intersect the voxel 12 coordinates exactly. Therefore, the value of each sample point must be synthesized from the values of voxels nearby. That is, the intensity of light, color, and transparency or opacity at each sample point 20 must be calculated or interpolated as a function of the values of nearby voxels 12. The re-sampling of voxel data values to values at sample points is done in accordance with sampling theory. The sample points 20 of each ray 18 are then accumulated by another mathematical function to produce the brightness and color of the pixel 22 corresponding to that ray. The resulting set of pixels 22 forms a visual image of the object 14 in the image plane 16.

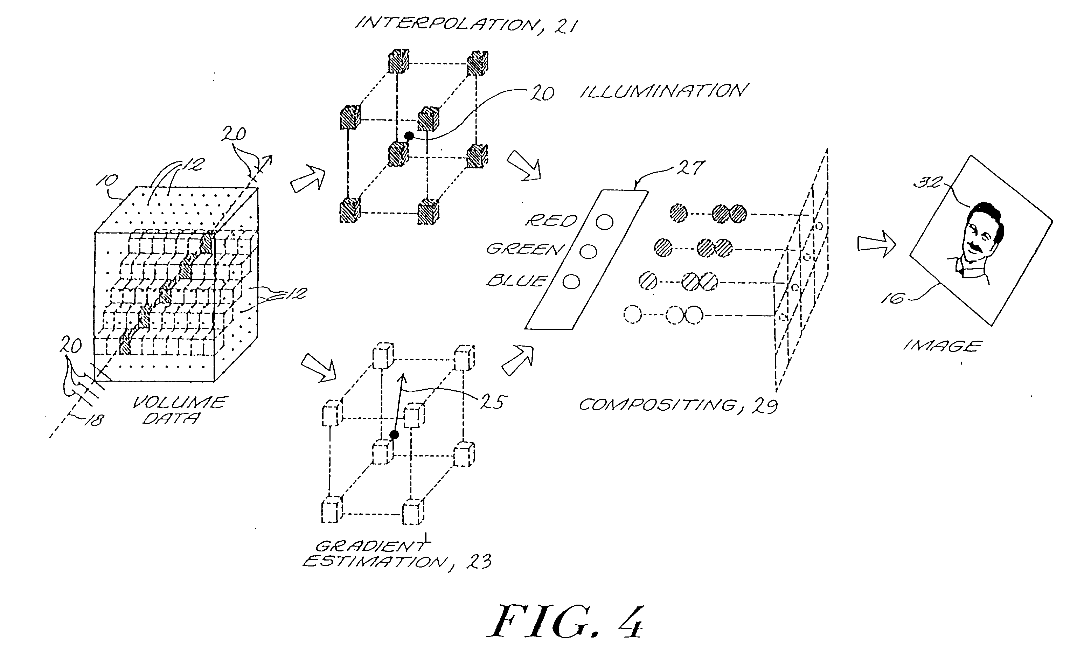

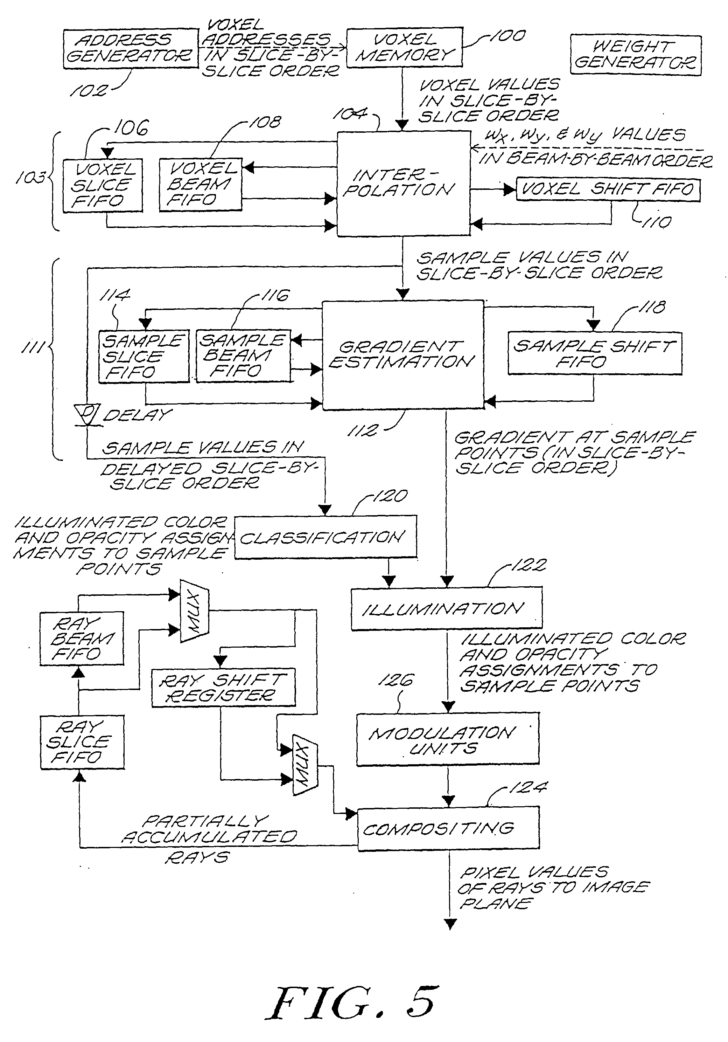

Figure 4 illustrates the processing of an individual ray 18. Ray 18 passes through the three-dimensional volume data set 10 at some angle, passing near or possibly through voxel positions 12, and accumulates data at sample points 20 along each ray. The value at each sample point is synthesized as illustrated at 21 by an interpolation unit 104 (see Figure 5), and the gradient at each sample point is calculated as illustrated at 23 by a gradient estimation unit 112 (see Figure 5). The sample point values from sample point 20 and the gradient 25 for each sample point are then processed to assign color, brightness or intensity, and transparency or opacity to each sample. As illustrated at 27, this processing is done via pipeline processing in which red, green and blue hues as well as intensity and opacity or transparency are calculated. Finally, the colors, levels of brightness, and transparencies assigned to all of the samples along all of the rays are applied as illustrated at 29 to a compositing unit 124 that mathematically combines the sample values into pixels depicting the resulting image 32 for display on image plane 16.

The calculation of the color, brightness or intensity, and transparency of sample points 20 is done in two parts. In one part, a function such as trilinear interpolation is utilized to take the weighted average of the values of the eight voxels in a cubic arrangement immediately surrounding the sample point 20. The resulting average is then used to assign a color and opacity or transparency to the sample point by some transfer function. In the other part of the calculation, the gradient of the sample values at each sample point 20 is estimated by a method such as taking the differences between nearby sample points. It will be appreciated that these two calculations can be implemented in either order or in parallel with each other to produce equivalent results. The gradient is used in a lighting calculation to determine the brightness of the sample point. Lighting calculations are well-known in the computer graphics art and are described, for example, in the textbook "Computer Graphics: Principles and Practice," 2nd edition, by J. Foley, A. van Dam, S. Feiner, and J. Hughes, published by Addison-Wesley of Reading, Massachusetts, in 1990.

Figure 5 depicts a block diagram of a pipelined processor appropriate for performing the calculations illustrated in Figure 4. The pipelined processor comprises a plurality of pipeline stages, each stage of which holds one data element, so that a plurality of data elements are processed at one time. Each data element is at a different stage of progress in its processing, and all data elements move from stage to stage of the pipeline in lock step. At the first stage of the pipeline, a series of voxel data values flow into the pipeline at a rate of one voxel per cycle from a voxel memory 100, which operates under the control of an address generator 102. The interpolation unit 104 receives voxel values located at coordinates X, Y and Z in three-dimensional space, where X, Y and Z are each integers. The interpolation unit 104 is a set of pipelined stages that synthesize data values at sample points between voxels corresponding to positions along rays that are cast through the volume. During each cycle, one voxel enters the interpolation unit and one interpolated sample value emerges. The latency between the time a voxel value enters the pipeline and the time that an interpolated sample value emerges depends upon the number of pipeline stages and the internal delay in each stage.

The interpolation stages of the pipeline comprise a set of interpolator stages 104 and three FIFO elements 106, 108, 110 for recirculating data through the stages. In the current embodiment, these are all linear interpolations, but other interpolation functions such as cubic and LaGrangian may also be employed. In the illustrated embodiment, interpolation is performed in each dimension as a separate stage, and the respective FIFO elements are included to recirculate data for purposes of interpolating between voxels that are adjacent in space but widely separated in the time of entry to the pipeline. The delay of each FIFO is selected to be exactly the amount of time elapsed between the reading of one voxel and the reading of an adjacent voxel in that particular dimension so that the two can be combined in an interpolation function. It will be appreciated that voxels can be streamed through the interpolation stage at a rate of one voxel per cycle with each voxel being combined with the nearest neighbor that had been previously recirculated through the FIFO associated with that dimension.

Within the interpolation stage 104, three successive interpolation stages, one for each dimension, are cascaded. Voxels pass through the three stages at a rate of one voxel per cycle at both input and output. The throughput of the interpolation stages is one voxel per cycle. The throughput is independent of the number of stages within the interpolation unit and independent of the latency of the data within the interpolation unit and the latency of the recirculation stages within that unit. Thus, the interpolation unit converts voxel values located at integer positions in XYZ space into sample values located at non-integer positions at the rate of one voxel per cycle. In particular, the interpolation unit converts values at voxel positions to values at sample positions disposed along the rays.

Following the interpolation unit 104 is a gradient estimation unit 112, which also comprises a plurality of pipelined stages and recirculation FIFOs. The function of the gradient unit 112 is to derive the rate of change of the sample values in each of the three dimensions. The gradient estimation unit operates in a similar manner to the interpolation unit 104 and computes the rate of change of the sample values in each of the three dimensions. The gradient is used to determine a normal vector for illumination. The magnitude of the gradient is used to determine the existence of a surface. Typically, the existence of a surface is indicated when the magnitude of the gradient is high. In the present embodiment the gradient calculation is performed by taking central differences, but other functions known in the art may be employed. Because the gradient estimation unit 112 is pipelined, it receives one interpolated sample per cycle, and it outputs one gradient per cycle. As with the interpolation unit 104, each gradient is delayed from its corresponding sample by a number of cycles which is equal to the amount of latency in the gradient estimation unit 112, including respective recirculation FIFOs 114, 116, 118. The delay for each of the recirculation FIFOs is determined by the length of time needed between the reading of one interpolated sample and nearby interpolated samples necessary for deriving the gradient in that dimension.

The interpolated sample and its corresponding gradient are concurrently applied to the classification and illumination units 120 and 122 respectively at a rate of one interpolated sample and one gradient per cycle. Classification unit 120 serves to convert interpolated sample values into colors used by the graphics system; i.e., red, green, blue and alpha values, also known as RGBA values. The red, green, and blue values are typically values in the range of zero to one inclusive and represent the intensity of the color component assigned to the respective interpolated sample value. The alpha value is also typically in the range of zero and one inclusive and represents the opacity assigned to the respective interpolated sample value.

The gradient is applied to the illumination unit 122 to modify or modulate the newly assigned RGBA values by adding highlights and shadows to provide a more realistic image. Methods and functions for performing illumination are well known in the art. The illumination and classification units 120,122 accept one interpolated sample value and one gradient per cycle and output one illuminated color and opacity value per cycle.

In the current embodiment, the interpolation unit 104 precedes the gradient estimation unit 112, which in turn precedes the classification unit 120. In other embodiments these three units may be arranged in a different order. In particular, for some applications of volume rendering it is preferable that the classification unit precede the interpolation unit. In this case, data values at voxel positions are converted to RGBA values at the same positions as the voxels, then these RGBA values are interpolated to obtain RGBA values at sample points along rays.

Modulation units 126 receive illuminated RGBA values from the illumination unit 122 to permit modification of the illuminated RGBA values, thereby modifying the image that is ultimately viewed. One such modulation unit 126 is used for cropping the sample values to permit viewing of a restricted subset of the data. Another modulation unit 126 provides a function to show a slice of the volume data at an arbitrary angle and thickness. A third modulation unit 126 provides a three-dimensional cursor to allow the user or operator to identify positions in XYZ space within the data. Each of the above identified functions is implemented as a plurality of pipelined stages accepting one RGBA value as input per cycle and emitting as an output one modulated RGBA value per cycle. Other modulation functions may also be provided which may likewise be implemented within the pipelined architecture herein described. The addition of the pipelined modulation units 126 does not diminish the throughput (rate) of the processing pipeline in any way but rather affects the latency of the data passing through the pipeline.

The compositing unit 124 combines the illuminated color and opacity values of all sample points along a ray 18 to form a final pixel value corresponding to that ray for display on the computer terminal or two-dimensional image surface 16. RGBA values enter the compositing unit 124 at a rate of one RGBA value per cycle and are accumulated with the RGBA values at previous sample points along the same ray. When the accumulation is complete, the final accumulated value is output as a pixel 22 to the display or stored as image data. The compositing unit 124 receives one RGBA sample per cycle and accumulates these ray by ray according to a compositing function until the ends of rays are reached, at which point the one pixel per ray is output to form the final image. A number of different functions well known in the art can be employed in the compositing unit 124, depending upon the application.

In order to achieve a real-time volume rendering rate of, for example, 30 frames per second for a volume data set with 256 x 256 x 256 voxels, voxel data must enter the pipelines at 256³ x 30 frames per second or approximately 500 million voxels per second. Although the calculations associated with any particular voxel involve many stages and therefore have a specified latency, calculations associated with a plurality of different voxels can be in progress at once, each voxel being at a different degree of progression and occupying a different stage of the pipeline. This makes it possible to sustain a high processing rate despite the complexity of the calculations.

The above described pipelined processor can be replicated as a plurality of parallel pipelines to achieve higher throughput rates by processing adjacent voxels in parallel. The cycle time required in each pipeline to achieve real-time volume rendering is determined by the number of voxels in a typical volume data set, multiplied by the desired frame rate, and divided by the number of pipelines. In the illustrated embodiment in which a volume data set of 256³ is to be rendered at 30 frames per second, four pipelines each with a cycle time of 7.5 nanoseconds are employed.

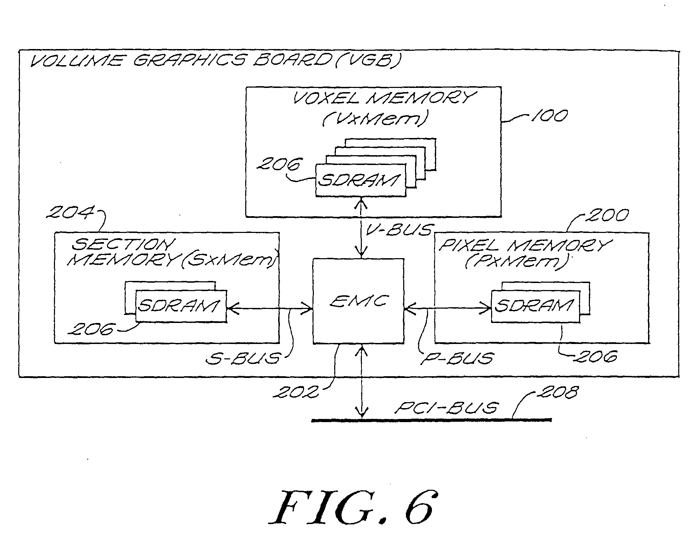

Figure 6 shows the logical layout of a volume graphics printed circuit board that performs a volume rendering process such as depicted in Figure 4 using pipelines as shown in Figure 5. The main components on the board are a voxel memory 100 which stores the voxels 12 of the volume data set 10, a pixel memory 200 which stores pixels of the image generated by the volume rendering process, an integrated circuit labelled "EMC" 202 which is the processor of the volume graphics board, and a section memory 204 used by the EMC 202 in a manner described below. The memories 200, 202 and 204 include arrays of synchronous dynamic random-access memories (SDRAMs) 206. As shown, the EMC 202 has interface buses V-Bus, P-Bus, and S-Bus to communicate with the respective memories 200, 202 and 204. The EMC 202 also has an interface for an industry-standard PCI bus 208, enabling the volume graphics board to be used with a variety of common computer systems.

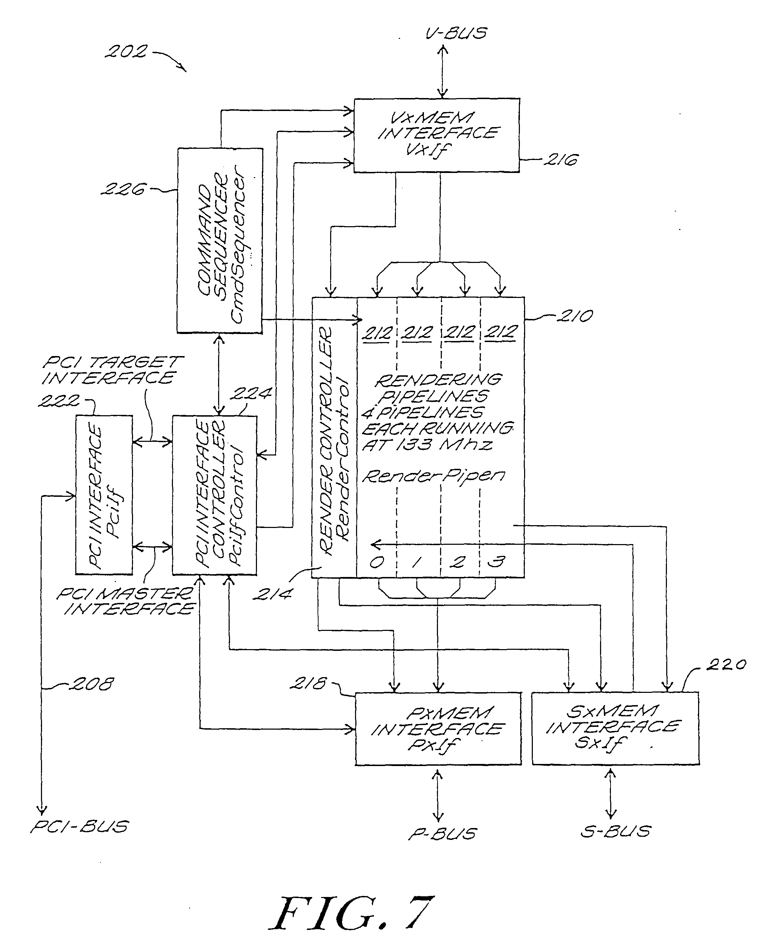

Figure 7 shows that the EMC 202 includes a pipelined processing element 210 like that shown in Figure 5, the processing element 210 having 4 parallel rendering pipelines 212 and a render controller 214. The processing element 210 obtains voxel data from the voxel memory 100 via voxel memory interface logic 216, and provides pixel data to the pixel memory 200 via pixel memory interface logic 218. A section memory interface 220 is used to transfer read and write data between the rendering engine 210 and the section memory 204 of Figure 6. A PCI interface 222 and PCI interface controller 224 provide an interface between the EMC 202 and the PCI bus 208. A command sequencer 226 synchronizes the operation of the processing element 210 and voxel memory interface 216 to carry out operations specified by commands received from the PCI bus.

The four pipelines 212 operate in parallel in the X direction, i.e., four voxels V_{x,y,z}, V_{(x-1),y,z}, V_{(x-2),y,z}, V_{(x-3),y,z} are operated on concurrently at any given stage in the four pipelines 212. The voxels are supplied to the pipelines 212 in 4-voxel groups in a scanned order in a manner described below. All of the calculations for data positions having a given X coefficient modulo 4 are processed by the same rendering pipeline 212. Thus it will be appreciated that to the extent intermediate values are passed among processing stages within the pipelines 212 for calculations in the Y and Z direction, these intermediate values are retained within the rendering pipeline in which they are generated and used at the appropriate time. Intermediate values required for calculations in the X direction are passed from each pipeline 212 to a neighboring pipeline 212 at the appropriate time. The section memory interface 220 and section memory 204 of Figure 6 are used to temporarily store intermediate data results when processing a section of the volume data set 10, and to provide the saved results to the pipelines 212 when required processing another section. Sectioning-related operation is described in greater detail below.

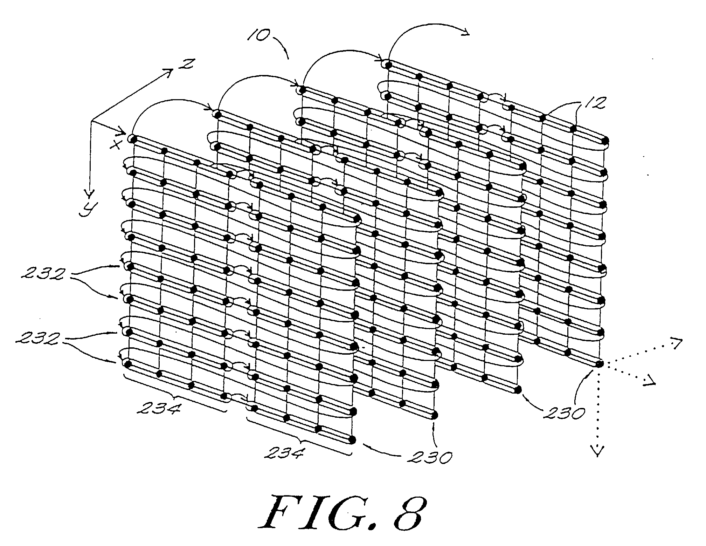

Figure 8 illustrates the organization and traversal of the voxels 12 that are used during the rendering of a volume data set 10 in the illustrated embodiment. The data set 10 is divided into parallel "slices" 230 in the Z direction (which as described above is the axis most nearly parallel to the view direction). Each slice230 is divided into "beams" 232 in the Y direction, and each beam 232 consists of a row of voxels 12 in the X direction. The voxels 12 within a beam 232 are divided into groups 234 of voxels 12 which as described above are processed in parallel by the four rendering pipelines 212.

In the illustrated embodiment, the groups 234 consists of four voxels along a line in the X dimension. The groups 234 are processed in left-to-right order within a beam 232; beams 232 are processed in top-to-bottom order within a slice 230; and slices 230 are processed in order front-to-back. This order of processing corresponds to a three-dimensional scan of the data set 10 in the X, Y, and Z directions. It will be appreciated that the location of the origin and the directions of the X, Y and Z axes can be different for different view directions.

Although in Figure 8 the groups 234 are illustrated as linear arrays parallel to the X axis, in other embodiments the groups 234 may be linear arrays parallel to another axis, or rectangular arrays aligned with any two axes, or rectangular parallelepipeds. Beams 232 and slices 230 in such other embodiments have correspondingly different thicknesses. For example in an embodiment in which each group 234 is a 2x2x2 rectangular array, the beams 232 are two voxels thick in both the Y and Z dimensions, and the slices 230 are 2 voxels thick in the Z dimension. It will be appreciated that in such alternative embodiments various of the elements of Figure 7 will have correspondingly different operation. However, the method of processing the volume data set described herein will still apply.

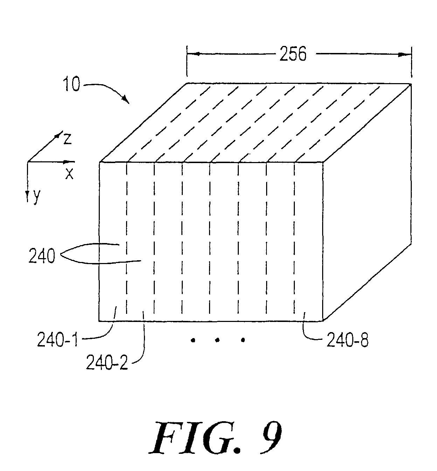

Figure 9 illustrates the manner in which the volume data set 10 is divided into "sections" 240 in the X direction. Each section 240 is defined by boundaries, which in the illustrated embodiment include respective pairs of boundaries in the X, Y and Z dimensions. In the case of the illustrated X-dimension sectioning, the top, bottom, front and rear boundaries of each section 240 coincide with corresponding boundaries of the volume data set 10 itself. Similarly, the left boundary of the left-most section 240-1 and the -right boundary of the right-most section 240-8 coincide with the left and right boundaries respectively of the volume data set 10. All the remaining section boundaries are boundaries separating sections 240 from each other.

In the illustrated embodiment, the data set 10 is 256 voxels wide in the X direction. These 256 voxels are divided into eight sections 240, each of which is thirty-two voxels wide. Each section 240 is rendered separately in order to reduce the amount of FIFO storage required within the processing element 210. The voxel processing order described above is used within a given section 240. That is, within the left-most section 240-1, thirty-two voxels (eight groups of four) are processed in order within the top-most beam 232, then the beams 232 are processed from top to bottom within a slice 230, and finally the slices are processed front-to-back within the section 240-1. After the first section 240-1 has been processed, the second section 240-2 is processed in the same manner. This process repeats until the 8th section 240-8 has been processed. The processing near the boundaries between sections 240 is different from the processing within the interior of each section 240. The manner in which processing near section boundaries is performed is described below.

In the illustrated embodiment, the volume data set 10 may be arbitrarily wide in the X direction provided it is partitioned into sections of fixed width. The size of the volume data set 10 in the Y direction is limited by the sizes of FIFO buffers, such as buffers 106 and 114 of Figure 5, and the size of the volume data set 10 in the Z direction is limited by the size of a *section memory* which is described below.

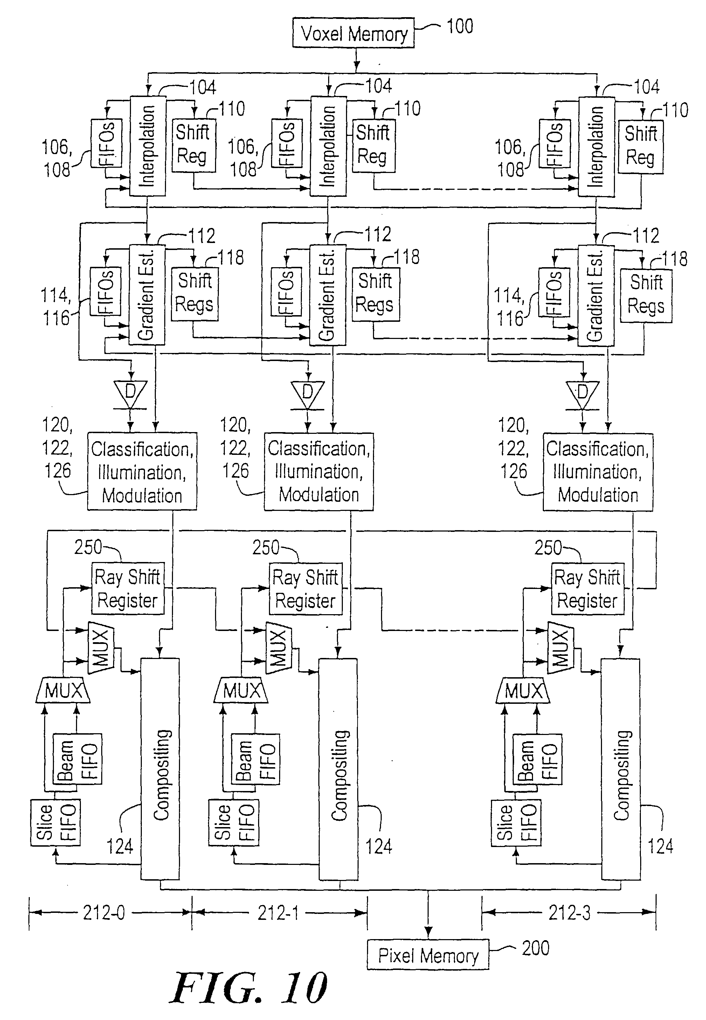

Figure 10 shows the processing element 210 of Figure 7 in greater detail. Parallel pipelines 212 receive voxels from voxel memory 100 and provide accumulated rays to pixel memory 200. For clarity only three pipelines 212-0, 212-1 and 212-3 are shown in Figure 7. As shown previously in Figure 5, each pipeline 212 includes an interpolation unit 104, a gradient estimation unit 112, a classification unit 120, an illumination unit 122, modulation units 126 and a compositing unit 124, along with associated FIFO buffers and shift registers. Each pipeline 212 processes all voxels 12 whose X coordinate value modulo 4 is a given value between 0 and 3. Thus for example pipeline 212-0 processes voxels at positions (0,Y,Z), (4,Y,Z), ... , (252,Y,Z) for all Y and Z between 0 and 255. Similarly, pipeline 212-1 processes voxels at positions (1,Y,Z), (5,Y,Z), ... , (253,Y,Z) for all Y and Z, etc.

In order to time-align values as required for calculations, each operational unit or stage of each pipeline 212 passes intermediate values to itself in the Y and Z dimensions via the associated FIFO buffers. For example, each interpolation unit 104 requires voxels at positions (X,Y,Z) and (X,Y+1,Z) in order to calculate the Y component of an interpolated sample at position (X,Y,Z). The voxel at position (X,Y,Z) is delayed by a beam FIFO 108 (see Figure 5) in order to become time-aligned with the voxel at position (X,Y+1,Z) for this calculation. An analogous delay can be used in the Z direction in order to calculate Z components, and similar delays are also used by the gradient units 112 and compositing units 124.

It is also necessary to pass intermediate values for calculations in the X direction. However, in this case the intermediate values are not merely delayed but are also transferred out of one pipeline to a neighboring pipeline via the associated shift register. This reflects the fact that each pipeline 212 is responsible for processing voxels with different X coordinates modulo 4. As an example, the interpolation unit 104 in pipeline 212-0 calculates intermediate values during the calculation of a sample at position (X,Y,Z). Some of the intermediate values are also required for calculating a sample at position (X+1,Y,Z), which is performed by the interpolation unit 104 in the neighboring pipeline 212-1. The intermediate values are passed from the interpolation unit 104 in pipeline 212-0 to the interpolation unit 104 in pipeline 212-1 via an associated shift register 110.

It will be noted that the shift registers 110, 118 and 250 for the right-most pipeline 212-3 transfer values to inputs of the left-most pipeline 212-0 with a delay of one cycle or one unit of time. This configuration enables the processing element 210 to step across the volume data set 10 in groups of 4 voxels. For example, intermediate values calculated for positions (3,Y,Z) are passed to the left-most pipeline 212-0 to be used for calculations for positions (4,Y,Z) in the next cycle. Likewise, intermediate values calculated for positions (7,Y,Z), (11,Y,Z), etc. are passed to the left-most pipeline 212-0 to be used for calculations for positions (4,Y,Z), (12,Y,Z), etc. in respective next cycles.

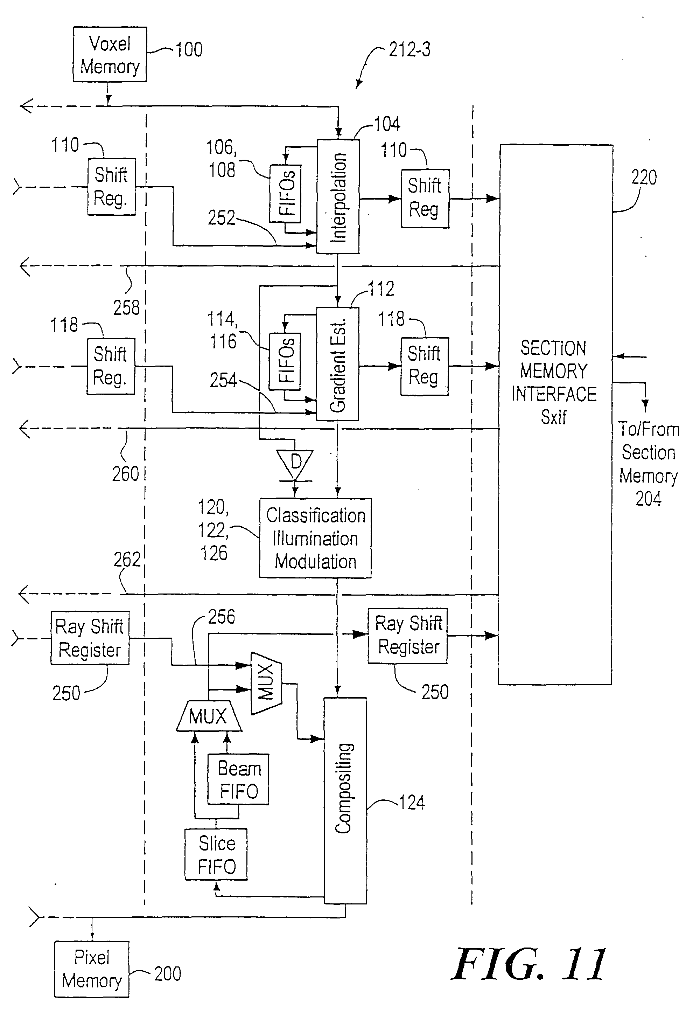

Figure 11 shows the interface between the section memory 204 of Figure 6 and the processing element 210. The section memory interface logic SxIf 220 provides an interface among the section memory 204, the right-most rendering pipe 212-3, and the left-most rendering pipe 212-0 of Figure 10. Figure 11 shows that the communication between the right-most pipeline 212-3 and the left-most pipeline 212-0 is actually slightly different than shown in Figure 10. Data from the shift registers 110, 118 and 250 of the right-most rendering pipe 212-3 is transferred to the section memory interface 220. The left-most rendering pipe 212-0 of Figure 10 receives data from outputs 258, 260, and 262 of the SxIf 220. Thus in the X direction data flows from left to right among the rendering pipes 212, into the SxIf 220 from rendering pipe 212-3, and out of the SxIf 220 to rendering pipe 212-0. The specific manner of operation is described in greater detail below.

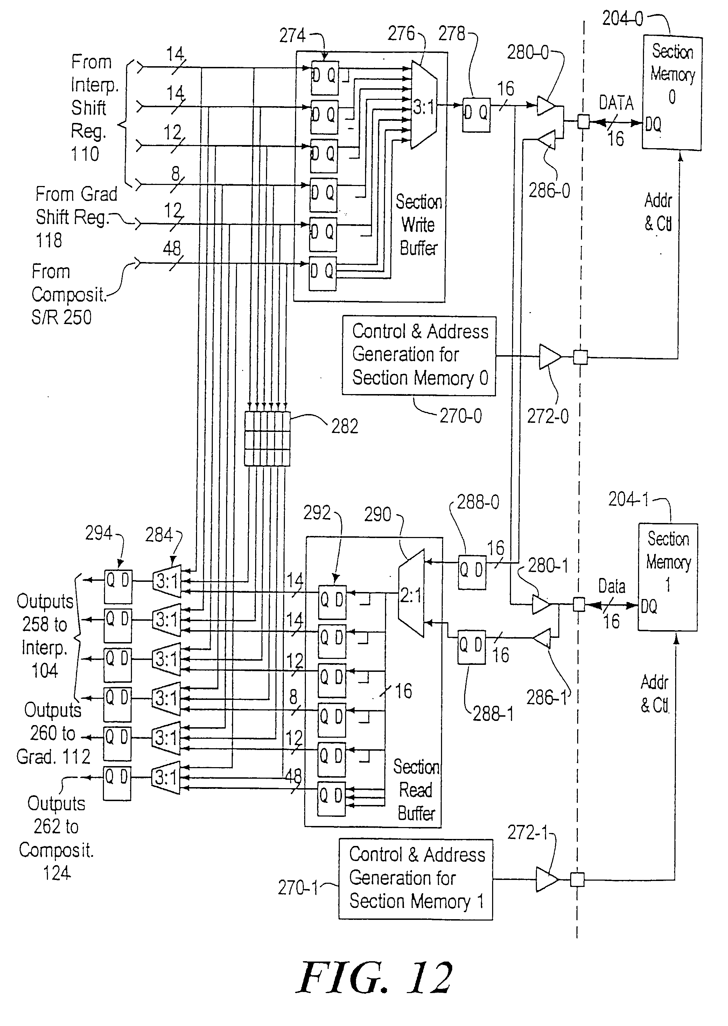

Figure 12 shows the section memory interface SxIf 220 and the section memory 204. The section memory 204 is split into two separate banks or modules, section memory 0 (204-0) and section memory 1 (204-1). Each section memory 204-0 and 204-1 has associated address and control logic 270-0 and 270-1, which provide address and control signals via respective sets of buffers 272-0 and 272-1, and each section memory 204-0 and 204-1 can operate independently of the other.

The SxIf 220 receives data from the shift registers 110, 118 and 250 of the right-most pipe 212-3 into a write buffer consisting of registers 274 and 8:1 selectors 276. Further registers 278 and tristate buffers 280-0 and 280-1 are used to establish write paths to the section memories 204-0 and 204-1 respectively. The input data from the right-most pipe 212-3 is also provided to FIFO buffers 282 and to 3:1 selectors 284 that form part of the section memory read path. As shown, the output from the FIFO buffers 282 is also provided to the 3:1 selectors 284.

The SxIf 220 receives a total of 108 bits from the right-most pipeline 212-3, while the write data path to section memory 204 is 16 bits wide. The 108 bits of input data are segregated into 8 groups as follows: the 48 bits from the interpolation stage are divided into 4 groups, the 12 bits from the gradient stage constitute 1 group, and the 48 bits from the compositing stage constitute 3 groups. The SxIf 220 receives a new set of 8 groups from the right-most pipeline 212-3 every 8th cycle, and each set is written to section memory 204 during a subsequent 8-cycle write operation. This write operation is described in greater detail below.

Along the read path, section memory data from input buffers 286-0 and 286-1 are provided to corresponding 16-bit registers 288-0 and 288-1. The outputs of the registers 288 are provided to 2:1 selectors 290, the outputs of which are provided to 8 sets of registers 292. The outputs of the selectors 290 are de-multiplexed into the same 8 groups discussed above, and each de-multiplexed group is loaded into the appropriate register group 292. The outputs of the registers 292 are provided as inputs to the 3:1 selectors 284. The outputs of the selectors 284 are latched in latches 294, and the outputs of the latches 294 are provided on lines 258, 260 and 262 as inputs to the right-most pipeline 212-0.

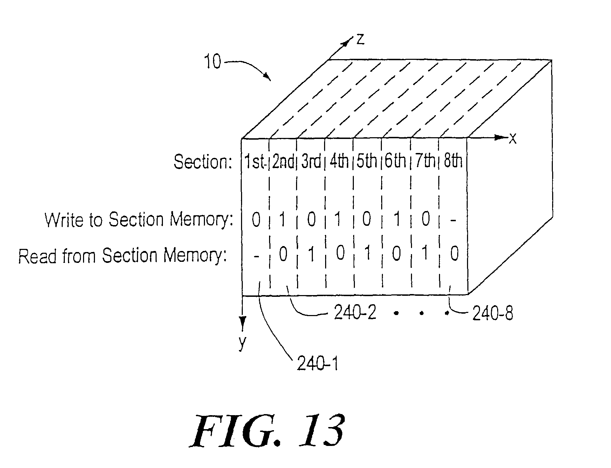

The operation of the various components shown in Figures 11 and 12 is now described with reference to the remaining Figures 13 - 17. Figure 13 shows that the two section memories 204-0 and 204-1 are used in an alternating fashion. Section data is written from the right-most rendering pipe 212-3 first to section memory 204-0 and then to section memory 204-1, and this alternating pattern is repeated for all 8 sections across the volume data set 10. Section data is read into rendering pipe 212-0 from the section memory 204 in the same alternating sequence, but shifted by one section-time with respect to the writing. In this manner, writing and reading proceed at full bandwidth without mutual interference.

Each beam 232 is processed in eight cycles, one 4-voxel group 234 per cycle. For seven of these cycles, processing proceeds without regard to the presence of section boundaries. During these seven cycles, data from the right-most pipe 212-3 is shifted into the left-most pipe 212-0 via the selectors 284 of Figure 12. When a section boundary is encountered at every eighth cycle, data from the right-most pipe 212-3 is written into section memory 204 for use subsequently during the processing of the next adjacent section. Also during every eighth cycle, data from the previous adjacent section 240 is read from section memory 204 and provided to the left-most pipe 212-0. This operation is described in greater detail below.

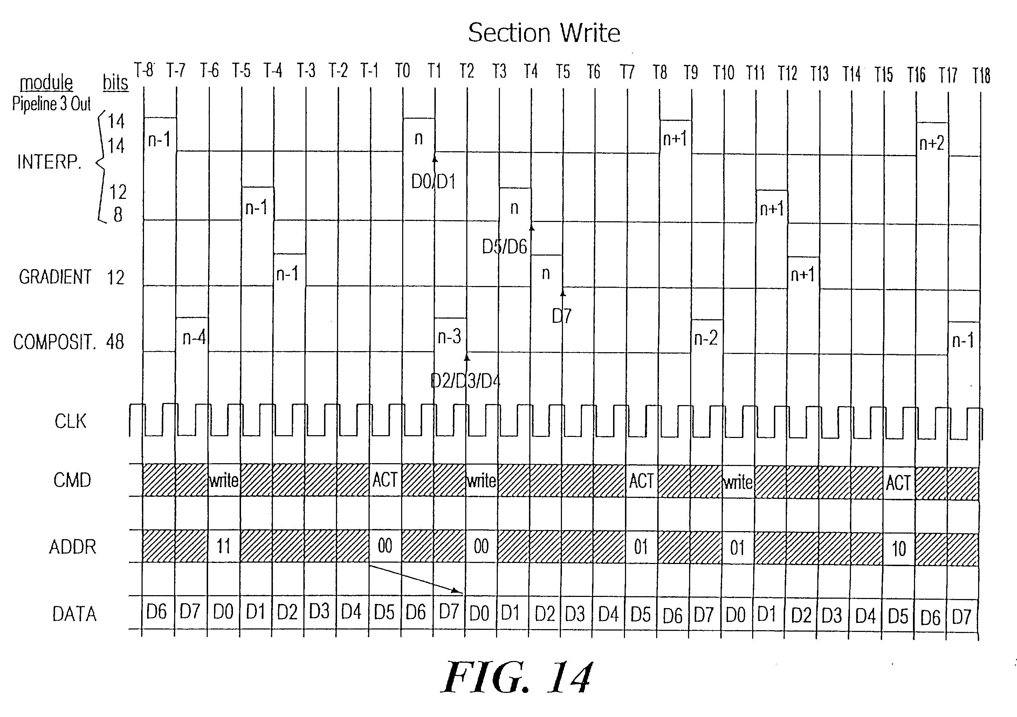

Figure 14 shows the section memory write operation. As shown, each stage of the right-most rendering pipe 212-3 generates outputs every eight cycles, these outputs reflecting the processing of the portion of a beam 232 within a section 240. The data from each stage is skewed in time with respect to the other stages as a result of pipeline latencies. Thus as shown output data for beam n-1 is generated by the interpolation stage 104 of Figure 5 at time T-8, while the compositing stage 124 does not generate the corresponding output data for the same beam until time T17, twenty-five cycles later.

Because of the large skew between "leading" data generated by the interpolation stage 104 and "trailing" data generated by the compositing stage 124, the values written into each eight-location block DO - D7 of section memory 204 contain data corresponding to two separate beams: locations D0, D1, D5, D6 and D7 contain data for beam n, while locations D2, D3 and D4 contain data for beam n-3.

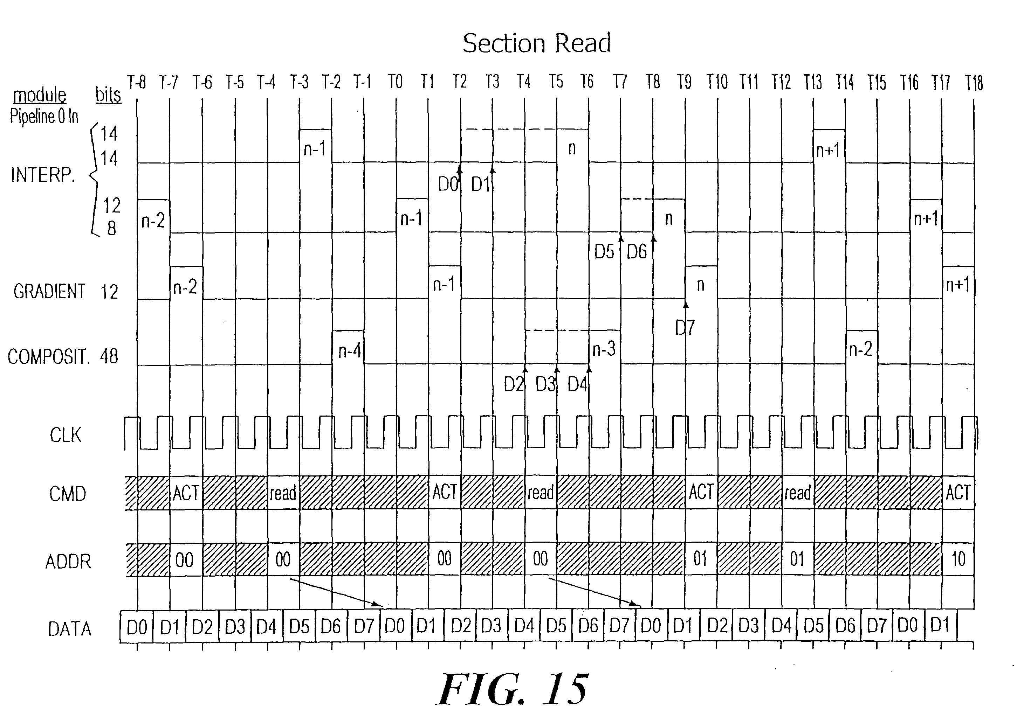

Figure 15 shows the section read operation. For each read, a set of contiguous data locations DO - D7 provide data to rendering pipe 212-0 as follows:

| | |
|---|---|
| D0, D1, D5 and D6 | Beam "n" to interpolation stage 104 |
| D7 | Beam "n" to gradient stage 112 |
| D2, D3, and D4 | Beam "n-3" to compositing stage 124 |

Thus the temporal skewing of the data is maintained.

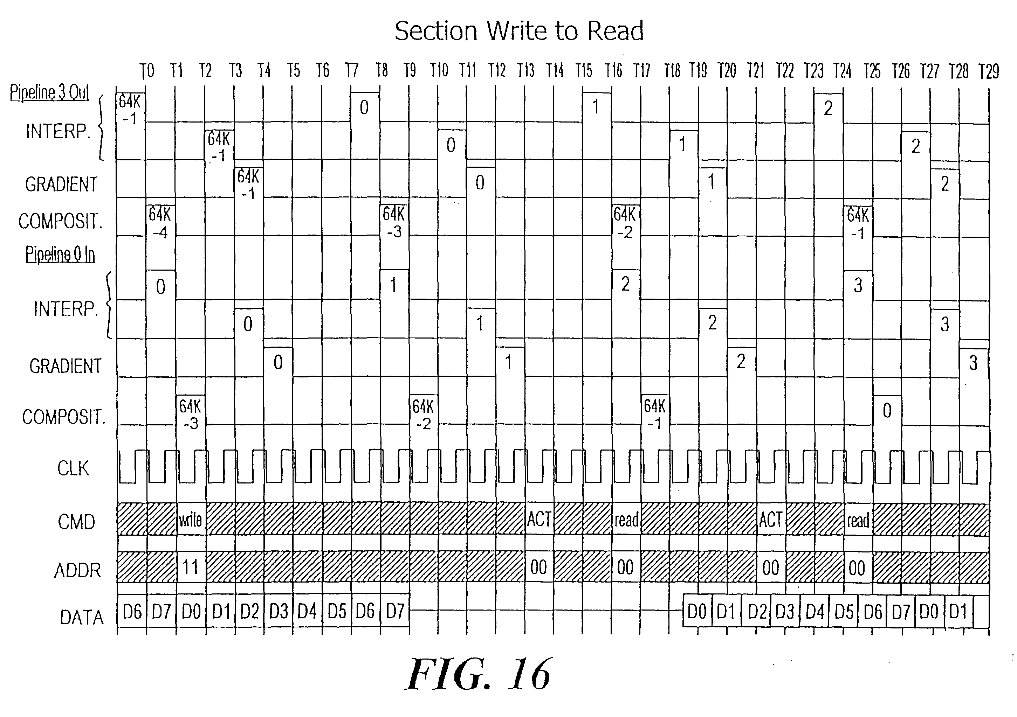

Figure 16 shows the transition between the writing and reading of a given section 240. It will be noted that in the illustrated embodiment approximately nine cycles elapse as a section memory bank 204-0 or 204-1 is turned around from the write direction to the read direction. This write-to-read gap gives rise to the need for buffering in order to maintain data flow among the pipelines 212 as described below.

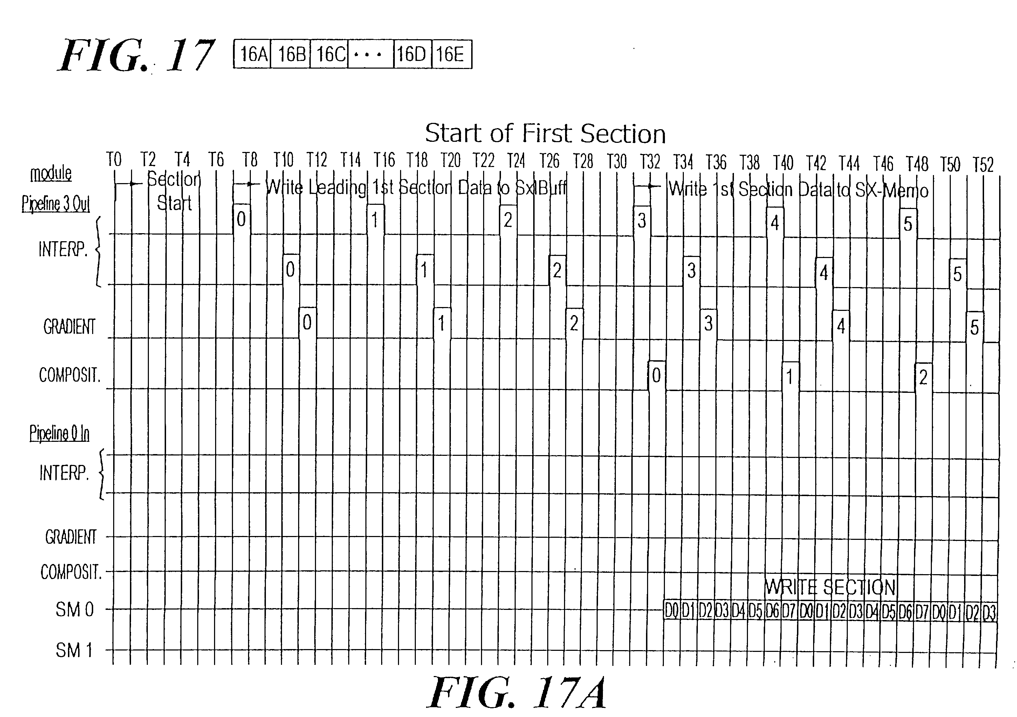

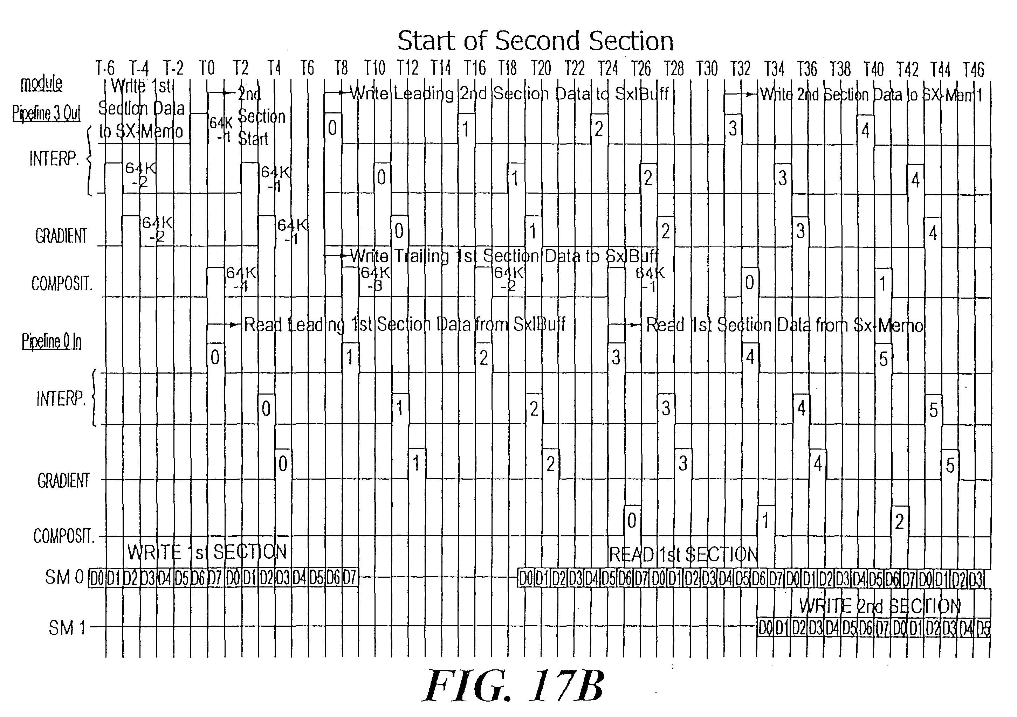

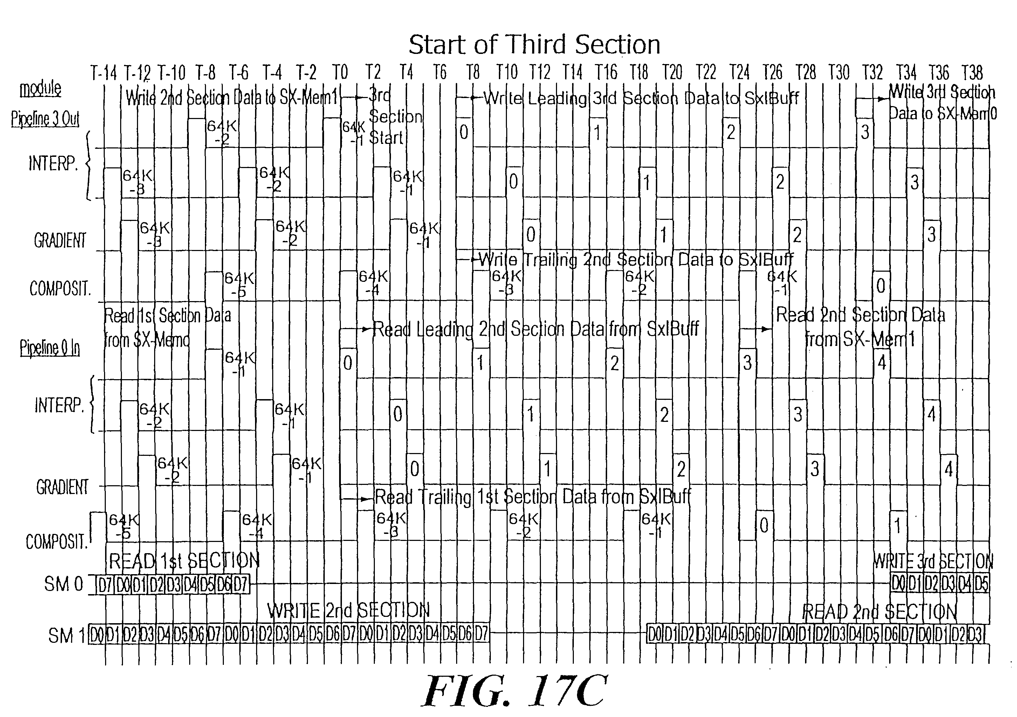

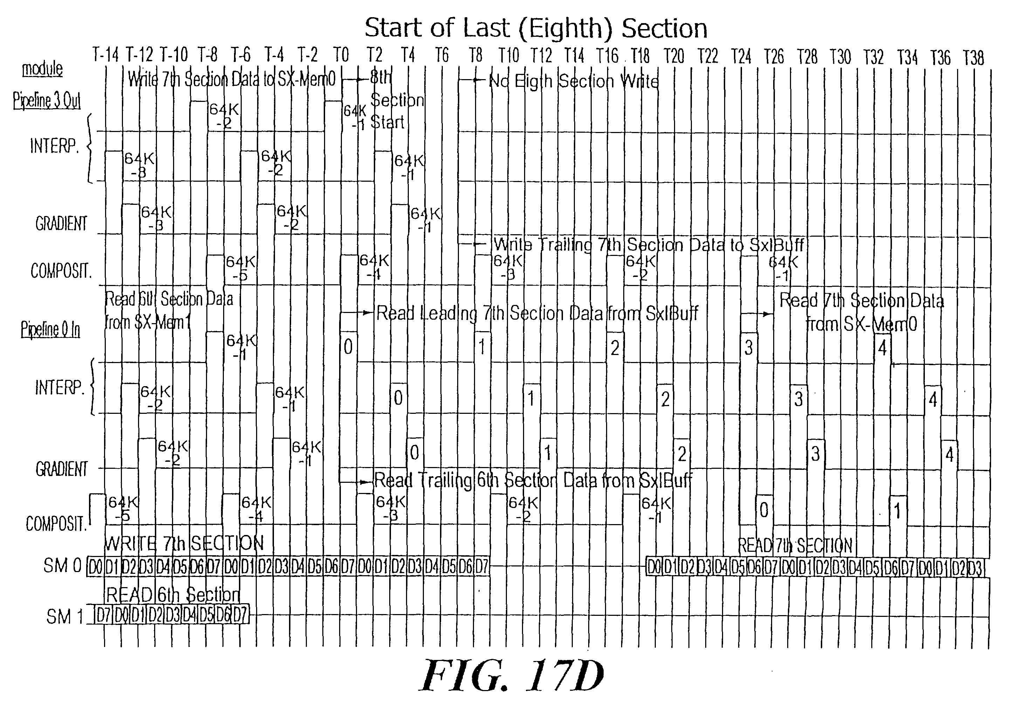

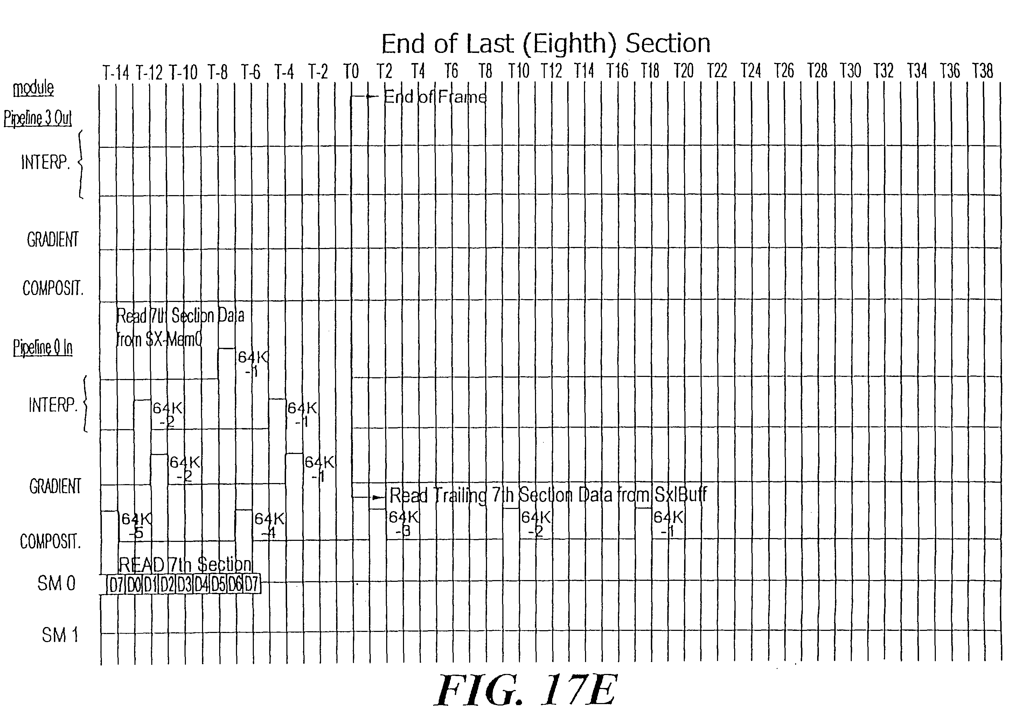

Figure 17, which consists of Figures 17A through 17E, shows the timing of section memory 204 throughout the processing of the eight sections 240-1 to 240-8. In Figure 17, the times Tx are all relative to the beginning of the processing for the respective section. Figure 17A shows that three beams worth of leading data from section 240-1 are written to the FIFO buffers 282, and then the remaining beams are written to section memory 204-0 thereafter. As shown in Figure 17B, rendering pipe 212-0 begins to read the leading data from the FIFO buffers 282 just as the leading data for the last beam is being written to section memory 204-0. During the time between T7 and T27, the leading data for section 240-2 and the trailing data for section 240-1 are written into the FIFO buffers 282. Meanwhile, time T24 is the beginning of the reading of section 240-1 from section memory 204-0. Finally, time T31 is the beginning of writing section 240-2 to section memory 204-1.

Figure 17C shows the transition between sections 240-2 and 240-3, which is similar to the transition between sections 240-1 and 240-2 shown in Figure 17B except that the FIFO buffers 282 provide trailing first section data to the compositing stage 124 of rendering pipe 212-0 simultaneously with providing leading second section data to the interpolation and gradient stages 104 and 112. Also, both section memories 204-0 and 204-1 transition between reading and writing, with the write-to-read transition of section memory 204-1 occurring first.

Figure 17D shows the transition between the seventh and eighth sections. Being the final section, the eighth section 204-8 is not written to the section memory 204. The primary activity during the period shown in Figure 17D is providing 7th section data to rendering pipe 212-0 in order to process the 8th section 204-8, a process that continues into the period shown in Figure 17E. The indication "End of Frame" in Figure 17E indicates that one entire pass through the volume data set 10 has been made, and a complete set of processed rays resides in pixel memory 200 for the current rendering.

In the present embodiment, the volume data set is organized in a rectangular coordinate system, and the sections are rectangular parallepipeds. In alternative embodiments the volume data may be organized in different coordinate systems. Also, it may be desirable to employ sections of different shapes in either rectangular or non-rectangular coordinate systems.

An embodiment of the present invention having been described, it will be apparent to those skilled in the art that modification to and variation of the above-described methods and apparatus are possible without departing from the inventive concepts disclosed herein. Accordingly, the invention should be viewed as limited solely by the scope and spirit of the appended claims.

## Claims

1. A method of processing a three-dimensional volume data set comprising a plurality of voxels representing a three-dimensional object, the volume data set being bounded in each dimension and being partitioned into a plurality of sections defined by section boundaries, comprising for each section the steps of:
for each group of voxels in a first beam including at least one group of voxels, in a first step, reading each group of voxels of the beam from a memory and processing the voxels in each group within respective ones of a plurality of processing elements to generate partially composited ray data values at outputs of the processing elements until a section boundary is reached in a first dimension;
for each subsequent beam of voxels within a first slice including at least two beams of voxels, in a second step, repeating the first step until a section boundary is reached in a second dimension; and
for each subsequent slice of voxels in the section, repeating the first and second steps until a volume data set boundary is reached in a third dimension.

2. A method according to claim 1, wherein for each section the section boundary reached in the first dimension is a boundary between the section and a neighboring section, and the section boundary reached in the second dimension is a volume data set boundary in the second dimension.

3. A method according to claim 1, wherein for each section the section boundary reached in the first dimension is a volume data set boundary in the first dimension, and the section boundary reached in the second dimension is a boundary between the section and a neighboring section in the second dimension.

4. A method according to claim 1, wherein during the processing of a first section of the volume data set intermediate values are generated for use during the processing of a second section, and further comprising the steps of:
during the processing of the first section, storing the intermediate values into a memory; and
during the processing of the second section, retrieving the intermediate values from the memory and processing the retrieved intermediate values.

5. A method according to claim 1, wherein the voxels within each group are co-linear.

6. A method according to claim 5, wherein the voxels within each group are co-linear in the first dimension.

7. A method according to claim 1, wherein the volume data set is organized in a rectangular coordinate system.

8. A method according to claim 1, wherein the volume data set is organized in a rectangular coordinate system and the sections are rectangular parallelepipeds.

9. A method according to claim 1, wherein upon the completion of processing for all the sections the composited ray data values are fully composited ray data values, and further comprising the step of displaying a two-dimensional image consisting of a plurality of pixels, the value at each pixel being calculated from a corresponding different one of the fully composited ray data values.

10. A method according to claim 1, wherein the processing of voxels comprises re-sampling the three-dimensional volume data set into an array of sampled data of three or more dimensions.

11. A method according to claim 1, wherein the plurality of processing elements are parallel processing elements.

12. A volume rendering processor for use with memory storing a volume data set, the volume data set including a plurality of voxels representing a three-dimensional object, the volume data set bounded in each dimension and partitioned into a plurality of sections defined by section boundaries, the volume rendering processor including a plurality of parallel processing elements collectively operative to perform for each section the steps of:
for each group of voxels in a beam including at least one group of voxels, in a first step, reading each group of voxels of the beam from a memory and processing the voxels in each group within respective parallel processing elements to generate partially composited ray data values at outputs of the processing elements until a section boundary is reached in a first dimension;
for each subsequent beam of voxels within a slice including at least two beams of voxels, in a second step, repeating the first step until a section boundary is reached in a second dimension; and
for each subsequent slice of voxels in the section, repeating the first and second steps until a volume data set boundary is reached in a third dimension.

13. A volume rendering processor according to claim 12, wherein the processing elements are respectively associated with different ones of the voxels within each group, and wherein each processing element is operative to calculate intermediate values at positions in the volume data set corresponding to the voxels with which the processing element is associated by (i) retaining those intermediate values required for use in subsequent calculations for voxels associated with the processing element, (ii) transferring to a first neighboring processing element those intermediate values calculated by the processing element that are required for subsequent calculations for voxels associated with the first neighboring processing element, and (iii) receiving from a second neighboring processing element those intermediate values previously calculated by the second neighboring processing element that are required for calculations for voxels associated with the processing element.

14. A volume rendering processor according to claim 13, further comprising memory interface logic operative when processing near section boundaries to (i) store intermediate values being generated by one or. more of the processing elements into a memory to be used for calculations during the processing of a subsequent section, and (ii) retrieve intermediate values stored in the memory during the processing of a preceding section and supply the retrieved intermediate values into one or more of the processing elements for calculations therewithin.

15. A volume rendering processor according to claim 14, wherein the memory interface logic is operative during the processing of the interior portion of each section to transfer the intermediate values generated by the one or more processing elements to the one or more receiving processing elements bypassing the memory.

16. A volume rendering processor according to claim 14, wherein:
the processing element is operative when transitioning between sections to (i) receive into one or more of the processing elements previously-saved trailing intermediate values from the memory interface logic to complete processing of the current section, (ii)receive into the same one or more processing elements previously-saved leading intermediate values from the memory interface logic to begin processing of the succeeding section, (iii) generate out of one or more of the processing elements for the current section new trailing intermediate values for subsequent use by the processing elements during the processing of the succeeding section, and (iv) generate out of the same one or more processing elements for the succeeding section new leading intermediate values for subsequent use by the processing elements during the processing of the next-succeeding section; and
the memory interface logic includes a set of first-in-first-out (FIFO) buffers, the FIFO buffers being operative during the transition between sections to store the intermediate values generated out of the one or more processing elements and to provide intermediate values stored in the FIFO buffers during the preceding section transition to the processing elements.

17. A volume rendering processor according to claim 14, wherein the memory is arranged into two independent banks, and wherein the memory interface logic is operative to alternate between the two banks for storing the intermediate values on a section-by-section basis and for retrieving the intermediate values on a section-by-section basis, the retrieving of the intermediate values for a given section from one bank of the memory being overlapped in time with the storing of intermediate values for a succeeding section to the other bank of the memory.
